# EUROPEAN PATENT SPECIFICATION

(11) **EP 2 908 978 B1**
(45) Date of publication and mention of the grant of the patent: **05.01.2022**
(21) Application number: 13846880.6
(22) Date of filing: 21.10.2013
(51) Int. Cl.: B23K 26/08, B23K 26/24, B23K 26/00, B23K 26/02, B23K 26/03, B23K 26/22, B23K 26/14, B23K 26/06, B23K 26/142

(54) **ROBOTIC LASER SEAM STEPPER**
ROBOTISCHER LASERNAHTSTEPPER
DISPOSITIF PAS À PAS POUR SOUDURE LASER ROBOTIQUE

(30) Priority: 19.10.2012 US 201261716448 P
(43) Date of publication of application: 26.08.2015
(73) Proprietor: IPG Photonics Corporation, Oxford, Massachusetts 01540 (US)
(72) Inventor: FOMIN, Valentin, Oxford, MA 01540 (US); STAROVOYTOV, Anton, Oxford, MA 01540 (US); ABRAMOV, Andrey, Oxford, MA 01540 (US); GAPONTSEV, Valentin, Oxford, MA 01540 (US); FUCHS, Artjom, Oxford, MA 01540 (US); SCHRAMM, Ingo, Oxford, MA 01540 (US); SCHERBAKOV, Eugene, Oxford, MA 01540 (US); MAMEROW, Holger, Oxford, MA 01540 (US)
(74) Representative: Kobiako von Gamm, Iouri
(86) International application number: PCT/US2013/065930
(87) International publication number: WO 2014/063153

(56) References cited:
- EP-A2- 1 153 696
- WO-A1-2012/062308
- DE-A1- 10 259 177
- DE-U1-202007 003 451
- JP-A- S63 108 980
- US-A- 5 026 979
- US-A1- 2004 026 388
- US-A1- 2006 102 599
- US-A1- 2007 119 829
- US-A1- 2011 278 265
- US-B1- 6 211 483
- US-B1- 6 288 359

## Description

### BACKGROUND OF THE DISCLOSURE

### Field of the Disclosure

The disclosure relates to the field of laser welding systems operative to join two or more overlaid metal workpieces. Particularly, the disclosure relates to a laser seam stepper configured with a 1 Class multi kW laser and having a light, compact structure which is capable of withstanding high mechanical loads. DE202007003451 U1 discloses a laminar flow (4) for preventing vortexes and minimizing damage to the protective window whereby this laminar flow in itself comprises from the inside to the outside different streams corresponding to different velocities and pressures being selected accordingly.

### Prior Art

Welding is commonly employed as an assembly method for joining several metal parts or sheet materials together into an assembly. Conventional welding methods are readily available and include, for example, arc and resistant spot welding. Fairly recently, a laser welding method has been found advantageous over the traditional welding methods at least in some respects. For example, the sharp focusing and high energy concentration of a laser beam provides faster welding with less heat being introduced into the surrounding portions of the workpieces. Yet, the design of a robotic laser welder offers a few structural challenges, as discussed below.

One of these challenges relates to the protection of focusing optics located in a laser head from welding debris and dust that tend to impinge upon a glass window sealing the access of debris into the laser head. The integrity of the glass window can be compromised by the debris and its replacement causes frequent stops of an automated assembly line. Typically, the air jet is introduced into a light guide at an angle to the longitudinal axis of the guide, a feature often referred to as a cross-jet technique. At high air pressure, the cross-jet causes vortexes inside the air guide. The vortexes generate a pressure gradient within the guide with the central zone of the guide being under a lower pressure than that of the peripheral zone. It has been noted that a pressure gradient detrimentally affects the quality of the laser beam and allows debris to flow along the central zone towards the protective window. In addition, the cross-jet causes an uncomfortably high level of noise.

Therefore, a need exists for a new design of air-supply assembly that, while performing its direct optic-protection functions, does not affect the quality of the laser beam.

Yet another challenge is associated with the quality of a seam particularly in light of a high energy concentration. If a power of laser beam is somewhat higher than the desired power, the beam may melt all of the overlaid pieces so as to form a through-going opening instead of joining these pieces. Conversely, a low power beam may not be sufficient to join the pieces. While there are various techniques for controlling the output power of a laser source, none of the known techniques is capable of determining the quality of a seam and alter the output power in response to the determined seam quality in real time. However the weld quality is one of, if not the most important parameter of any welding process.

Accordingly, a need exists for a fiber laser welding system configured with a system for automatically adjusting laser output based on the quality of a weld.

Another challenge stems from complex geometries of the pieces to be welded. Frequently, the pieces to be joined are not ideally positioned, and when a robot is displaced to the predetermined position, it is necessary to manipulate the robot in order to correct a position between the pieces and robot.

A need therefore exists for a robotic welding system provided with a mechanism which is configured to compensate for the difference between the desired and actual positions of the pieces to be welded without the undesired manipulation of the robot.

A further challenge also stems from the complex geometry of the pieces to be welded that often requires diametrically opposite vertical positions of the same robotic arm. Obviously, an actuator displacing this arm towards the pieces applies different moments corresponding to respective downward and upward directions of arm displacement due to gravity of the entire welding apparatus. The known methods of controlling an arm actuating force include manually inputting a data indicating the desired position of the arm. The manual operation may be imprecise and time consuming.

Accordingly, another need exists for the automatization of the arm displacing step.

### SUMMARY OF THE DISCLOSURE

The hand-maneuverable seam stepper disclosed here addresses all of the above-discussed needs. The disclosed welding system is detachably mounted to a robot operable to deliver the system to the desired location where the welding is performed.

According to one aspect of the disclosure addressing the cross-jet problems, a pressurized air stream is forced into a light guiding channel parallel to the longitudinal axis thereof. Such a delivery technique, referred to hereinafter as an "overjet", practically eliminates the pressure gradient between central and peripheral zones. As a result, small particles or debris flowing towards the protective window of the optical head are effectively turned back by the air stream which increases the life time of the protective window and does not affect the beam quality. Furthermore, high-level noise associated with the cross-jet structure is considerably reduced by using the disclosed overjet configuration.

According to another aspect, in addition to the overjet, the tunnel is traversed by another stream of air removing relatively large welding debris and flowing parallel to the overjet. A pump creating a negative pressure within the tunnel guides a great volume of ambient air at a slow speed into the upstream end of the tunnel parallel to the overjet. Since the outlet evacuating both streams from the tunnel is located close to the welding zone, the streams carry out differently sized welding debris through the outlet.

A further aspect relates to the operation of the seam stepper. The overlaid metal pieces to be welded can be burnt through if the beam power is too high, and conversely, the pieces can have a weak bond if the beam power is too low. With too high a beam power, a relatively large channel burned through the pieces is traversed by a greater amount of laser radiation. When the power is low, a relatively low amount of laser radiation finds its way through the pieces.

Based on the foregoing, the disclosure teaches a light detector juxtaposed on the back of a welding zone. Utilizing a feedback loop, the detected laser radiation is processed and compared to a reference value. A control signal is then coupled into a power source of laser system to alter the output power and provide the seam with the desired quality.

The pieces to be welded are typically slightly misplaced so that when a robot is guided to the desired position and engages the pieces, the desired pressure with which the pieces urge against one another is not reached. To compensate for a positioning error of the pieces relative to the robot's positions, the known prior art teaches maneuvering the robot so as to adjust its position relative to the current position of the pieces. Such an adjustment is time consuming and affects the efficiency of the process.

The disclosed welding system has a different approach to establishing the desired position. In the configuration of the welding system with two gripping arms, both are controllably displaceable so if the pieces are lower than the desired level, a pneumatically operated arm lifts the pieces to the desired level before the electrically actuated arm is guided to this level. Conversely, if the pieces are somewhat above the desired level, the electrically actuated arm brings the pieces to the desire level where the arms exert respective oppositely directing forces urging the pieces toward one another with the desired pressure.

The pneumatically operated arm is pre-stressed. Accordingly, its displacement requires different forces applied to the arm depending on whether the arm moves upwards or downwards. When the gravity force is co-directional with the direction of the force applied to the arm, a relatively insignificant force slightly exceeding the pre-stressed force is generated. Otherwise, the generated force is substantially greater than the pre-stressed one. Based on the foregoing, the disclosed system is provided with a position-detecting unit which is operative to generate a control signal coupled into a pneumatic pump that generates the desired force based on the detected position of welding system.

### BRIEF DESCRIPTION OF THE DRAWINGS

The above and other features of the disclosed device will become more readily apparent from the following specific description accompanied by the drawings, in which:
FIG. 1 is an axonometric view of the disclosed laser welding system;
FIGs. 2A - 2C are respective sectional, side elevated and top views of an electrically operated arm;
FIGs. 3A - 3C and 4A - 4C illustrate the principle of operation of the disclosed welding system;
FIG. 5 is a view of a pneumatic mechanism operative to adjust the position of the pieces to be welded relative to a position of robot;
FIG. 6 is a flow chart illustrating the operation of a weld quality control system;
FIG. 7 is a view of a pneumatically operated arm of the disclosed welder;
FIG. 8 is an axonometric view of the disclosed welding system with the gripping arms illustrated in a welding position;
FIG. 9 is a side view of the disclosed welding system illustrating the operation of electrically operated arm;
FIG. 10 is a diagrammatic side view of the disclosed stepper;
FIG. 11 is an orthogonal view of the pressure end piece.
FIG. 12 is a flow chart of the operation of the disclosed welding system; and

### SPECIFIC DESCRIPTION

Reference will now be made in detail to several embodiments of the disclosure that are illustrated in the accompanying drawings. Wherever possible, same or similar reference numerals are used in the drawings and the description to refer to the same or like parts or steps. For purposes of convenience and clarity only, directional (up/down, etc.) or motional (forward/back, etc.) terms are used with respect to the plane of the drawing sheets. These and similar directional terms should not be construed to limit the scope of the invention in any manner. The drawings are in simplified form and are not to precise scale.

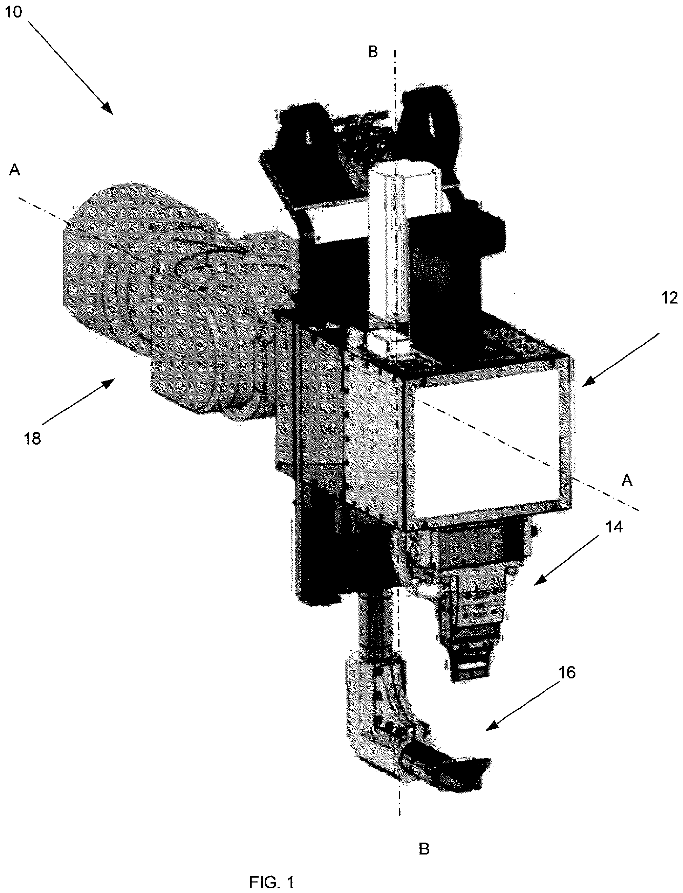

FIG. 1 illustrates a compact laser seam stepper 10 configured with a mount 18 which couples stepper 10 to a robot. In a mounted state, the robot can rotate stepper 10 about a rotation axis A-A and linearly displace the stepper along a longitudinal axis B - B, as will be disclosed in detail below. Two gripping arms - electrically operated arm 14 and pneumatically operated arm 16 - define a gripping unit capable of pressing the metal pieces to be welded towards one another with an adaptable force reaching a kN level, for example about 3 kN. The arms are removably mounted to a support assembly 12. A laser source, such as a high power fiber laser is configured to emit a monomode or multimode laser beam of up to a multi kilowatt level, for example about 4000 W. However, as disclosed below, the stepper is configured with an environment safety mechanism preventing a laser emission from bleeding outside when the welding is being performed, which classifies the disclosed stepper as a class 1 laser system. Overall, stepper 10 weighs up to about 45 kg when assembled with both arms 14 and 16, respectively, and less than that when it operates with only one electrically actuated arm 14 which may happen when the pieces to be welded are mounted to a stationary support.

The arms 14 and 16, respectively, move between a home position in which they are spaced apart at the largest distance, and a welding position in which the arms abut respective front and rear pieces to be welded. During welding, stepper 10 is configured to joint two or more pieces by forming a laser wobble seam up to about 40 - 50 mm. As the seam being welded, a laser emission is capable of propagating through molten metal pieces because at each point of time a small temporary passage is formed through the pieces. Once the beam is removed from the passage location, the molten material flows back filling the passage.

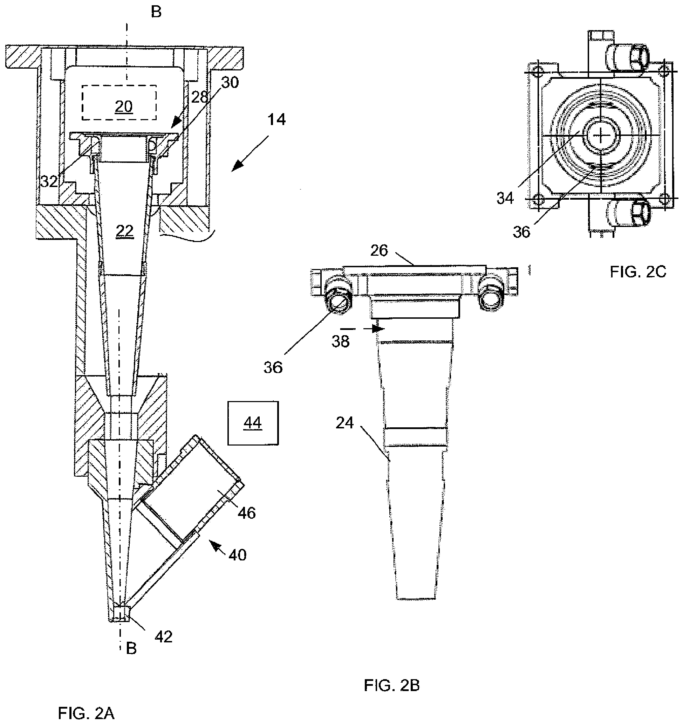

Referring to FIGs. 2A - 2C, displaceable arm 14 is configured to be a multifunctional component: in addition to a gripping function, the interior of this arm serves as the guide for the laser beam and fluid flow. One of the streams of the gaseous medium is formed to prevent or at least substantially minimize exposure of the protective glass window, which is mounted to the output end of optical head 20, from sparks and small particles or debris scattered from the welding zone in a direction counter to the light propagation direction. The other air stream, travelling parallel to the first stream at a pressure lower than that of the pressurized stream, deals with larger particles.

The arm 14 is structured with a hollow elongated interior which defines a tunnel 22 extending along longitudinal axis B-B of the stepper between input and output ends of the arm. The arm includes a housing 24 (FIG. 2B) capped by a flange 26 which removably couples arm 14 to an axially displaceable support plate, discussed hereinbelow. The housing structure may be monolithic or assembled from multiple components. For example, housing 24, as shown, includes a generally frustoconical two-part structure tapering towards the welding zone.

The flange 26, as shown in FIG. 2B, is recessed at input end 28 (FIG. 2A) thereof and configured with a multi-sep peripheral wall terminating with an axially extending shoulder 30 which overlaps the upstream end (along the light and air paths) of housing 24 (FIG. 2B). A short T-shaped tube 32 (FIG. 2A) is received in the recessed end of flange 26 and extends inwards so that it axially overlaps the upstream end of housing 24 and is spaced radially inwards from this end.

The relative position of housing 24, flange 26 and tube 32 defines a first relatively large annular space 34 (FIG. 2C) and a relatively narrow passage 36 which opens into annular space 34 by one of its ends and into the interior of housing 24 by the other end.

The annular space 34 receives a jet of pressurized gaseous medium, such as air, through radially extending inlet 36 (FIG. 2B). As the pressurized air jet fills up space 34, it bleeds through axial passage 36 into the interior or tunnel 22 of housing 24 parallel to axis B - B. As the pressurized air flows through the tunnel, its pressure falls practically to the atmospheric pressure. The axial delivery and further flow of initially pressurized air stream along the tunnel is referred to hereinafter as an "overjet." The overjet effectively prevents small welding debris from damaging the protective glass window of optical head 20, which dramatically increases the life time of the laser head.

The laser head 20 is configured to receive a 500 mm laser beam and has about 100 mm collimating length and about 250-300 mm focusing length. Although these parameters are given as an example, they allow the protective window to be spaced from the welding zone at a distance larger than that of the known prior art.

The configuration of displaceable arm 14 allows creating a negative pressure in the tunnel for removing, in addition to small particles, large particles also originated in the welding zone. Such pressure can be created by using an air inlet 38 diagrammatically shown by the dashed arrow in FIG. 2B provided anywhere along the upstream region of housing 24 or even using the optical head as an air guide. This second air stream enters the tunnel, as mentioned above, at a pressure lower than that of the first stream of pressurized air and hence at low velocity. Preferably, the second stream is under the atmospheric pressure. In the end, the pressure of the second stream is so selected that air vortexes, which are typical for a pressurized cross-jet entering the tunnel at a high speed in the known devices, are eliminated.

A suction outlet 40, better seen in FIG. 2A, opens into tunnel 22 within housing 24 close to pressure end piece 42 and is in fluid communication with an external negative pressure generated by a source 44 through a hose 46 so as to create a pressure gradient between upstream and downstream ends of tunnel 22. The second air stream 38 (FIG. 2B) is sucked into tunnel 22 in a volume substantially exceeding the air volume of the overjet within the tunnel. Both air streams are axially unidirectional and under substantially the same, relatively low pressure along a larger stretch of the air path along the tunnel. The overjet, slow speed and large volume second air stream and uniform direction of both streams, in combination, practically eliminate the interference between the air streams, provide effective evacuation of small and large welding debris and do not affect the quality of the laser beam traversing the tunnel.

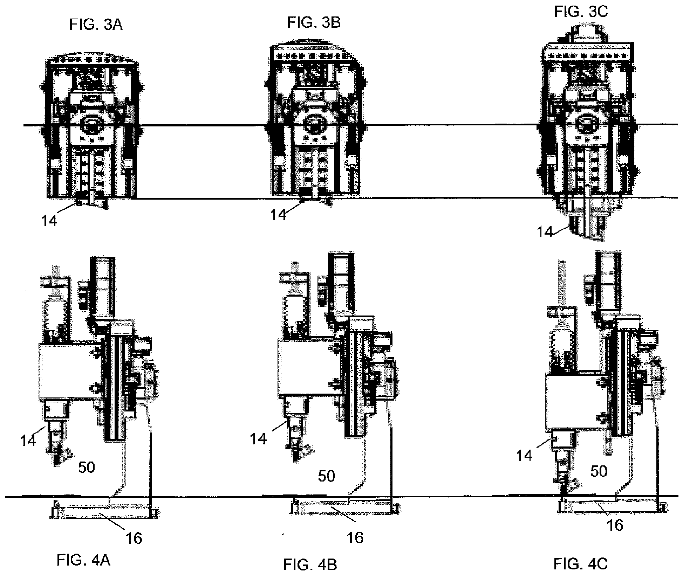

Referring to all FIGs. 3 and 4, the operation of stepper 10 begins with its displacement towards a group of overlaid metal pieces 50 as better shown in FIGs. 3A-4A. The pneumatically operated arm 16 (FIG. 4A) is dropped to its lowest position beyond pieces 50. Such a displacement of this arm prevents a collision between stepper 10 and stack of pieces 50, as often happened with the known steppers that could not lower (or raise) this arm beyond the plane of the workpieces. In this position, further referred to as a home position, electrically operated arm 14 is not actuated as seen in both FIGs. 3A and 4A.

Referring to FIGs. 3B and 4B, once arm 16 is juxtaposed with pieces 50, the pneumatic mechanism displaces it toward and preferably in contact with the pieces. Even if initially, the position of pieces 50 was slightly off the desired position, arm 16 brings the pieces in the desired position. The electrically operated arm 14 is still deactivated.

FIGs. 3C and 4C illustrate a final positioning operation in which electrically operated arm 14 is displaced to urge against the pieces. The arms therefore create forces which are diametrically opposite and partially compensate one another which substantially reduce a load on the robot support 12. Even more importantly, pieces 50 are reliably pressed upon one another even if initially they may have been located off the desired position. As can be readily understood, displaceable arm 16 and its actuating mechanism function as a compensator for inevitable positioning errors between the pieces and robot. Once the welding is complete, the sequence of the above-disclosed operations is reversed.

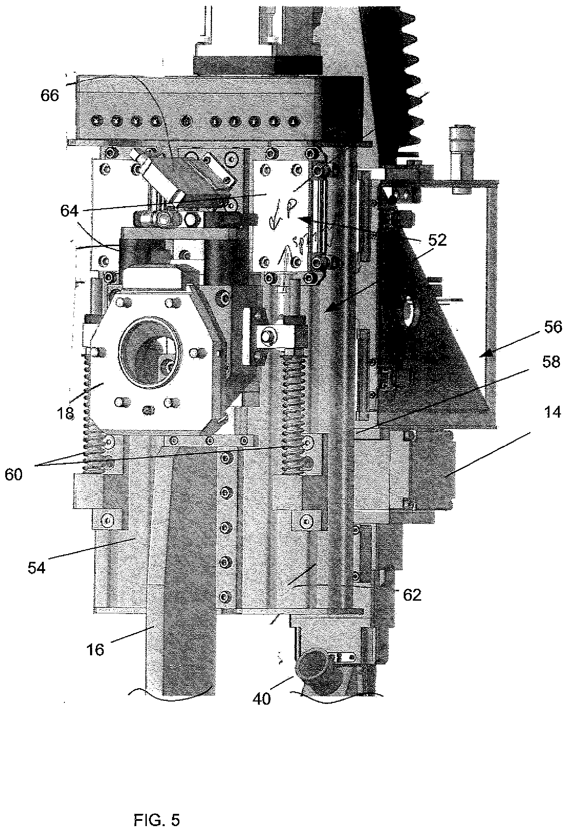

FIG. 5 illustrates pneumatic mechanism 52 operating arm 16. Structurally, stepper 10 is at least half the weight of the stepper disclosed in EP 2149421B1 which is co-owned with the present application and fully incorporated herein by reference. Nevertheless, the structural rigidity is about the same as or even better than the rigidity of the stepper disclosed in the above-mentioned reference.

The mass reduction has been achieved by creating a closed mechanical kinematic circuitry in which practically all forces associated with displacement of the stepper close in on a central column 54. For example, mount 18 coupling the stepper to a robot is directly coupled to the column. A frame 56, carrying the laser optical head, electrical actuator of arm 14, wobbling and linear drive mechanisms for providing a sinusoidal beam of the desired length all on one of its sides, and arm 14 on the opposite side, is slidably guided along one side of column 54 on, for example, rails 58. The pneumatic mechanism 52 for operating arm 16 is placed on the other side.

The pneumatic mechanism 52 is configured with two pre-stressed springs 60 which exert a force substantially equal to the weight of stepper 12 on arm 16 keeping it thus at the largest distance from arm 14 corresponding to the distance in the home position in FIG. 4A. One of the opposite ends of each spring is displaceably fixed to arm 16, where as the other end is slidable along a channel 62 milled in support column 54.

Two pneumatic cylinders 64 are aligned with respective springs 60. In the home position, cylinders 64 are under pressure lower than that generated by the springs which allows their full extension. When lower arm 16 needs to be displaced towards the workpieces to be welded, the pressure in cylinders 64 is increased to the predetermined level at which springs 60 are compressed so that arm 16 contacts the worksheets and displaces them upwards, if the arm 16 is the lower arm and the pieces are placed below the desired position relative to the robot. If the pieces are initially placed above the desired position, arm 16 is displaced to the welding position as can be seen in FIGs. 3AC and 4C, and the pieces are displaced by upper electrically operated arm 14 downwards to the welding position.

The pressure created in cylinder 64 depends on the position of stepper 12. When the stepper is positioned with arm 16 being a low arm relative to the other arm 14, a relatively small force should be applied to the spring in order to displace arm 16 towards pieces 50. Conversely, with arm 16 above arm 14, the generated force applied to the spring and sufficient to compress the spring is about twice the spring force. In the known steppers, typically the operator manually introduces position-related data.

In the disclosed stepper 12, the position of the arms is automatically determined by positioning sensor system 66. Once the position is detected, a signal generated by sensor 66 is received in a central processing unit or controller and the desired pressure is built in cylinder 64. After the welding is completed, springs are displaced to its initial position.

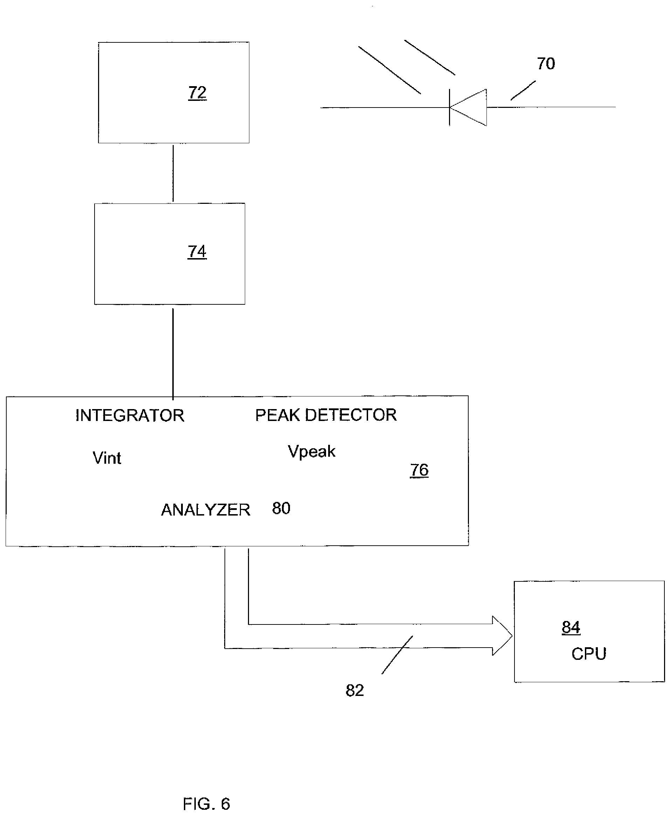

FIG. 6 illustrates a flow chart illustrating the operation of the seam quality control system. As the laser beam and pieces to be welded move relative to one another along a predetermined length and with the optical head wobbling at the predetermined frequency, the beam melts overlaid sheets so as to create a passage which extends through front and rear workpieces. As the beam moves further, molten metal flows back closing up the passage, but not before the passage is traversed by the laser beam. The measured intensity of the penetrated laser beam is indicative of the quality of the weld. If the measured intensity is higher than a reference value, as explained hereinbelow, the passage is too large and the output power of the laser is reduced. Conversely, if the measured intensity is lower than the reference value, the output laser power is increased.

The laser emission is detected by a light detector 70 which generates a signal augmented in an amplifier 72 and further converted in an analog-digital converter 74. The measured light has higher or lower levels of intensity with the high intensity corresponding to light peaks. The average (Vav) and peak (Vpeak) powers of the signal are determined in micro-controller 76. The controller can be of a type of integrated circuit known as field programmable gate array (FPGA) which can perform a variety of functions, including, for example integrator and peak detector functions, and has a lightweight structure. The analyzer 80 processes the determined powers and outputs a control signal corresponding to a Vav to Vpeak ratio. The latter is fed back through a feedback circuit 82 to a central processing unit 84. If the ratio is either smaller or greater than a reference value, unit 84 outputs a control signal coupled to the power source which is operable to increase or decrease the laser beam power.

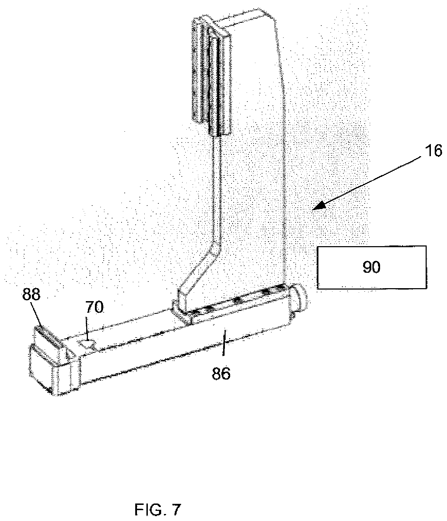

FIG. 7 illustrates an exemplary realization of the seam quality control of FIG. 6. The pneumatic arm 16 is provided with a through going nest which receives detector 70. The nest is formed in a base 86 of the L-shaped arm 16 which has a hollow interior. During welding, the laser emission is reflected from the bottom of the arm or from any type of a reflective screen located within the interior of the arm. The reflected light is detected by detector 70. The above-disclosed control feature may be easily realized by a different configuration. Instead of the arm, any light trap configuration, provided on the back of the welding zone and, optionally, having its interior isolated from ambient light, can be used in combination with a photodetector. Accordingly, the laser, integrated in the disclosed single-arm configuration, can be also controlled in accordance with the above-disclosed technique. Furthermore, instead of sensing reflected light, detector 70 can be positioned to directly detect the incident light.

During welding, debris may penetrate into the interior of arm's component 86 through bottomless pressure end piece 88. If not removed, the accumulated debris can damage this component and generally negatively affect the quality of a weld. To prevent the accumulation, the hollow interior of component 86 is in fluid communication with an outside pump 90. The latter may be the same pump as pump 44 in FIG. 2A or a different pump operative to create a pressure gradient sufficient for the removal of the debris through a hose. In addition to the pressure-evacuating technique, the bottom of component 86 can be detached for further removal of the accumulated debris.

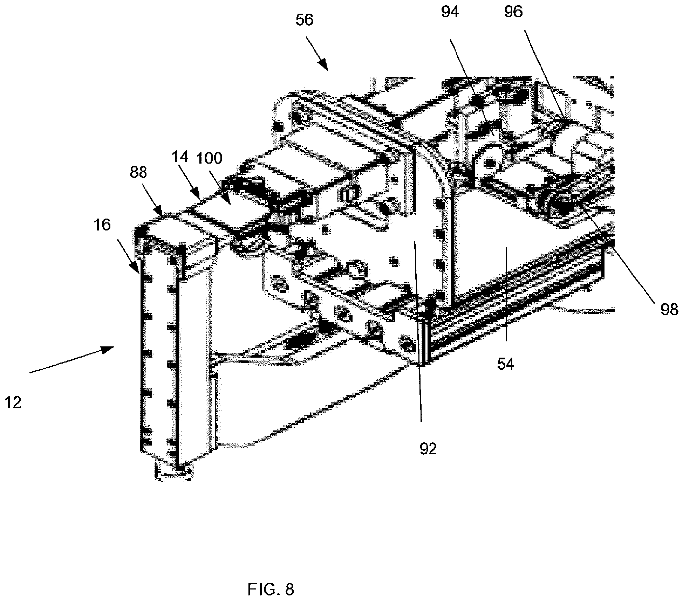

FIG. 8 illustrates some of the components of disclosed stepper 12. As disclosed above, a central support element, column 54 receives all kinematic loads associated with the displacement of the stepper. The frame 56, supporting among others arms 14 and 16, includes a plate 92 axially slidable along column 54 with wobbling and linear drive mechanisms 94 and 96, respectively. An electric motor applies a lines force to plate 92 via a transmission 98. The arm 14 is displaceably fixed to plate 92 and linearly travels to the welding position in which pressure end pieces 88 and 100 of respective arms 16 and 14 abut the front and rear workpieces so that no laser radiation escapes the welding zone delimited by geometrical parameters of the end pieces. The sealing of the welding zone is such that despite kW power levels, the laser is certified as Class 1 laser.

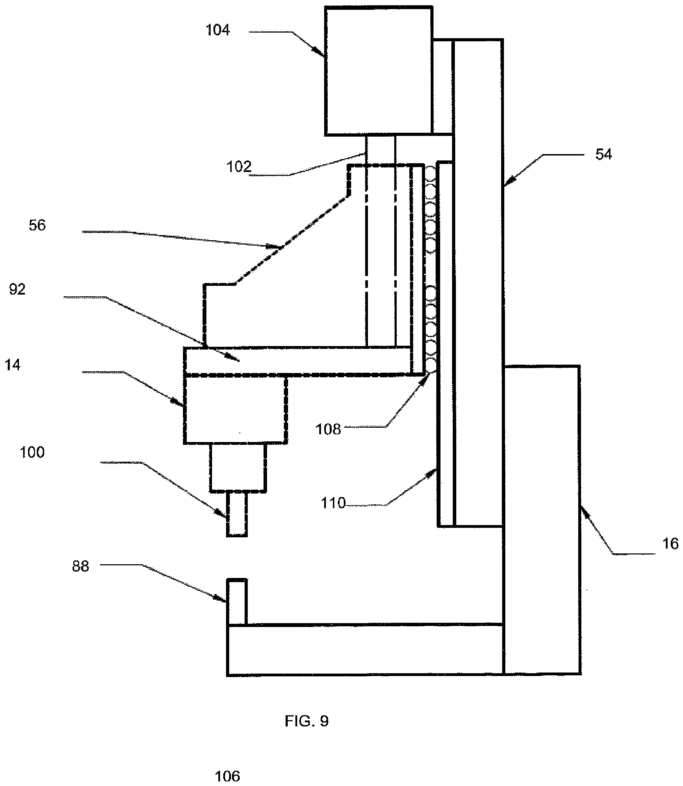

Referring to FIG 9, electrically operated arm 14 is initially located in a home position in which the distance between the arms is the largest. In use, arm 14 is first displaced upon the actuation of a shaft 102, which is connected to electrical motor 104, at a first linear speed to an open position, in which arm 14 is spaced from arm 16 a distance smaller than that in the home position. The shaft 102 is coupled to frame 56 that is guided along rails 110, which in turn is mounted to column 54, via a linear bearing 108. The displacement of arm 14 to the open position is monitored and, if any object is sensed along the way, the arm is stopped, until the object is removed. The arm 14 is further displaced to a closed position closer to the welding zone and, therefore, to arm 16 at a second speed lower than the first speed. The closed position corresponds to a predetermined distance from the workpiece which is a function of the piece's thickness. Finally, the arm 14 is displaced to the welding/gripping position in which it presses against the piece with the desired

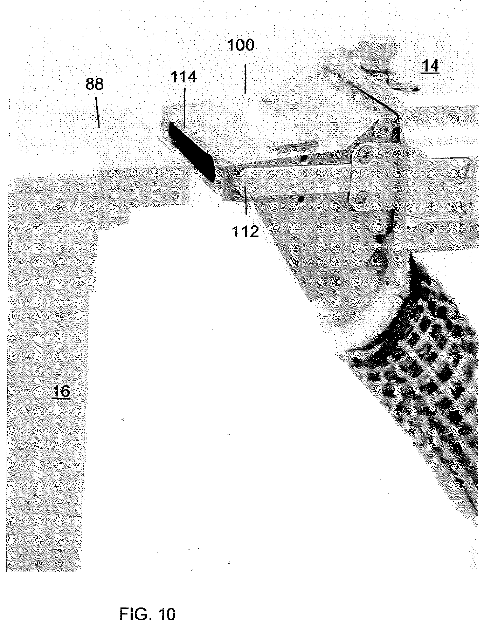

FIG. 10 illustrates a safety mechanism preventing firing the laser if end pieces 88 and 100, respectively, are not in full contact with the workpiece and if end piece 100 of arm 14 is damaged, and thus cannot properly operate. The safety mechanism is coupled to pressure piece 100 of arm 14 and includes two pre-stressed axially displaceable contacts 112 extending along respective sides of pressure piece 100. In the initial pre-stressed condition, both contact 112 extend beyond the edge of end piece 100 at a predetermined distance. If the front workpiece and arm 14 are correctly positioned, both contacts 112 touch the surface of the workpiece. If, however, the position is not correct, at least one of contacts 112 does not press against the workpiece, the laser cannot be fired.

The safety mechanism further includes a wire 114 which is electrically connected in series to each of contacts 112. If at least one of these components does not generate a signal received by a microcontroller, the circuitry remains open and the controller does not output a control signal to the power source of the laser, which thus remains inactivated.

The wire 114 is mounted at a short distance from the edge of end piece 100 in a closed groove running around the perimeter of the end piece. If end piece 100 damaged and wire 114 directly contacts the surface of the front workpiece, it will easily break up preventing firing the laser source.

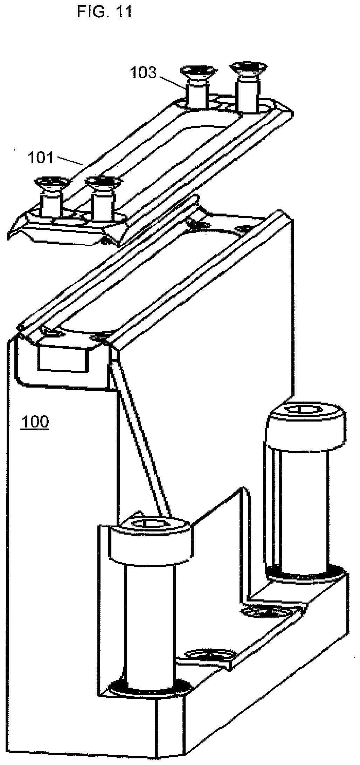

FIG. 11 illustrates end piece 100, but the description of the following feature relates to the other end piece 88 as well. To ensure that contacting surfaces of respective end pieces 88 and 100 are not exposed to the excessive wear, a protective plate 101 is coupled to the contacting surface. The plate 101 is made from hardened steel and can be welded to the contacting surface, which may complicate the replacement of the plate if necessary. Preferably, plate 101 is removably mounted to the contacting surface by means of fasteners 103.

If plate 101 is coupled by fasteners 103, its inner surface is grooved to accommodate wire 114. In case of welding, a tube is placed between the surface 103 and plate 101 before these parts are welded. The wire 114 is then pulled through the tube. The addition of plate 101 not only increases the useful life of the end piece. It also facilitates both the assembly of the disclosed device and its maintenance.

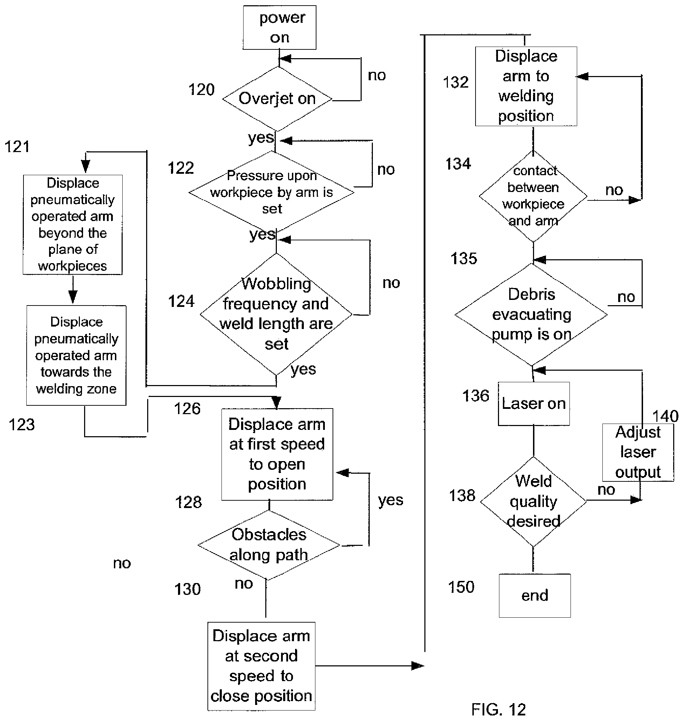

FIG. 12 illustrates the operation of disclosed stepper 10. It is worth noting that all controllers incorporated in a controlling scheme of stepper 10 are based on the FPGA platform which considerably decreases the overall weight of the whole assembly compared to somewhat similarly configured steppers or guns which are based on a programmable logical controller (PLC) platform.

In response to a turn on signal, the external source of pressurized medium provides the overjet within tunnel 22 (FIG. 2A) of electrically operated arm 14 as shown at 120. Simultaneously with or subsequent to the overjet, motor 104 (FIG. 8) is actuated and operates until the desired pressure upon the workpiece, weld length and wobbling frequency are set, as shown at 122 and 124, respectively. Provided all of the above disclosed steps are completed, pneumatically operated arm 16 is displaced beyond the plane of the workpieces to be welded and then moved to the desired position, as shown at respective steps 121 and 123.

Thereafter, motor 104 starts displacing arm 14 from the home position to the open position, as illustrated by numeral 126. As arm 16 moves toward the open positions at a relatively high speed, the presence of any obstacles along the path is continuously controlled at 128. A further displacement of arm 14 to the closed position at 130 is provided at a relatively slow speed. Finally, arm 14 is displaced to the welding position so as to provide the desired pressure on the workpiece at 132.

In the welding position, the contact between end pressure piece 100 and the surface of the workpiece is verified as shown at 134. Either after the contact control or before, pump 44 (FIG. 2A) is actuated to create a pressure gradient evacuating all air streams along with welding debris. Only after all of the above, the laser outputs a beam and a welding operation begins, as indicated by 136. During the welding operation, the quality of the seam is controlled, as disclosed above and indicated here by 138. If necessary, the beam's power is adjusted at 140. Once the welding operation is completed, the arms are returned back to respective initial positions and all actuators may be turned off, as shown in 150.

## Claims

1. A laser seam stepper (10) operable to join two or more overlaid metal pieces (50), comprising:
an elongated support column (54) extending along a longitudinal axis (B-B);
an optical head (20) axially displaceable along the support column (54) and provided with optics which are configured to focus a laser beam along a path through a protective window of the optical head (20) on a welding zone; and
a first arm (14) mounted to the support column (54) along the path downstream from the protective window and coupled to the optical head (20) so as to axially move between a home position and a welding position in which the first arm (14) presses against one of the metal pieces (50) in the welding position, the first arm (14) being configured to enclose the welding zone so as to prevent laser emission from escaping outside the welding zone,
the first arm (14) being structured with an inner peripheral surface which defines an elongated tunnel (22) configured with open upstream and downstream ends, the tunnel (22) being configured to be axially traversed by:
the laser beam,
a first axially flowing stream of pressurized gaseous medium, and
a second axially flowing stream of gaseous medium at a second pressure lower than that of the first stream; and
a first vacuum source (44) in fluid communication with the downstream end of the tunnel (22) and operable to extract the first and second streams from the tunnel (22) upon generating a pressure gradient between the upstream and downstream ends of the tunnel (22) so that the welding debris are evacuated from the tunnel (22) through the downstream end of the tunnel (22) with the first and second streams, the second pressure being under the atmospheric pressure to prevent formation of air vortexes, wherein the first and second axially flowing streams substantially minimize contact between the protective window and welding debris flowing within the tunnel (22), wherein a volume of the second stream substantially exceeding a volume of the first stream within the tunnel, wherein the second stream having a slow speed and wherein the first and the second streams are axially unidirectional.

2. The laser seam stepper of claim 1 further comprising
a second arm (16) detachably coupled to the support column (54), and
first and second material supporting pressure end pieces (88, 100) aligned to one another and detachably mounted to respective first and second arms (14, 16), the pressure end pieces (88, 100) pressing against respective metal pieces (50) to be welded with a predetermined force during a welding operation with the laser beam.

3. The laser seam stepper of claim 1 further comprising:
a photodetector (70) configured to detect the laser radiation propagating through the pieces (50) to be welded, and
a controller (76) receiving a signal from the photodetector (70) and operable to match an intensity of the propagating laser beam to a reference value so that if the measured intensity does not match the value, a power of the laser beam is adjusted and a quality of the seam is improved.

4. The laser seam stepper of claim 2, wherein the second arm (16) is slidably mounted to the column (54) and configured with first and second components (86) which are coupled together to define an L-shape, the second component (86) being configured with an inner surface defining a hollow interior configured to reflect the propagating laser beam towards the photodetector (70).

5. The laser seam stepper of claim 4 further comprising a vacuum unit (90) in fluid communication with a free end of the second component (86) of the L-shaped arm, the vacuum unit (90) being operable to create a pressure differential within the interior sufficient to remove the welding debris therefrom.

6. The laser seam stepper of claim 4, wherein the L-shaped arm (16) is configured with a detachable bottom (86) receiving welding debris which are removed therefrom upon displacing the bottom.

7. The laser seam stepper of claim 4 further comprising a pneumatic actuator (52) coupled to the column (54) and operable to axially displace the second arm (16) in one axial direction (B-B) away from metal pieces (50) to be joined so as to avoid a collision therewith, and an opposite axial direction (B-B) towards the pieces (50).

8. The laser stepper of claim 7, wherein the pneumatic actuator (52) is configured with:
a plurality of pre-stressed springs (60) generating a first force preventing the second arm (16) from voluntary displacement in the opposite axial direction (B-B), and
a plurality of pneumatic cylinders (64) each coupled to the pre-stressed spring (60) and operable to apply a second force to the spring (60) so that the spring (60) compresses displacing the second arm (16) in the opposite axial direction (B-B) towards the pieces (50) when the second force exceeds the first force.

9. The laser stepper of claim 7 further comprising a positioning sensor (66) operable to determine a position of the arms (14, 16) relative to one another, wherein when the second arm (16) is below the first arm (14), the second force applied to the spring (60) and sufficient to displace the second arm (16) is larger than the second force when the second arm (16) is above the first arm (14).

10. The laser seam stepper of claim 1, wherein the first arm is configured with:
a housing (24) providing with the peripheral surface and having a frustoconical shape tapering towards the downstream end;
a recessed flange (26) configured with a peripheral wall narrowing towards the downstream end and axially overlapping an upstream region of the housing; and
a T-shaped tube (32) received in a recess of the flange (26) and extending axially into the housing (24) to overlap the upstream end thereof so as to define a large annular space (34) with the flange (26) and a narrow axial passage (36) with the housing (24), the annular space (34) and passage (36) being in fluid communication so that the first stream of gaseous medium enters the space (34) and further axially flows through the passage (36) into the tunnel (22) towards the downstream end of the housing (24).

11. The laser seam stepper of claim 10 further comprising:
a first actuator (96) operable to displace the support plate (92) along the column (54);
a second actuator operable to provide a seam with the desired length; and
a third actuator (94) operative to provide the seam with a sinusoid shape, the actuators being movably coupled to the support plate (92).

12. The laser seam stepper of claim 11, wherein the first actuator (96) is operative to linearly displace the first arm (14) among a plurality of spaced positions including:
a home position in which the first arm (14) is spaced from the pieces (50) at a first distance,
an open position in which the first arm (14) is spaced from the pieces (50) at a second distance smaller than the first distance;
a closed position with the first arm (14) located between the open position and the pieces (50), and
a gripping position in which the first arm (14) presses against the workpiece (50) with a desired force.

13. The laser seam stepper of claim 11, wherein the first actuator (96) is operable to displace the support plate (92) between the home and open positions at a linear speed higher than a linear speed of the support plate (92) between the open and closed positions.

14. The laser seam stepper of claim 1 further comprising a fiber laser emitting the laser beam.

15. The laser seam stepper of claim 2, wherein contact surfaces of respective pressure end pieces (88, 100) each are provided with a protective plate (101) made from hardened steel, the plates each being removably attached to the contact surface.

## Patentansprüche

1. Lasernahtstepper (10), der zur Fügung von zwei oder mehr überlappende Metallstücken (50) verwendet werden kann, umfassend:
eine längliche Trägersäule (54), die sich entlang einer Längsachse (B-B) erstreckt;
einen optischen Kopf (20), der axial entlang der Trägersäule (54) verschiebbar ist und mit Optiken ausgestattet ist, die entsprechend ausgestattet sind, um einen Laserstrahl entlang einem Weg durch ein Schutzfenster des optischen Kopfes (20) auf eine Schweißzone zu fokussieren; und
einen ersten Arm (14) der an der Trägersäule (54) entlang dem Weg nachgeschaltet zu dem Schutzfenster befestigt ist und mit dem optischen Kopf (20) entsprechend gekoppelt ist, sodass er sich axial bewegt zwischen einer Ausgangsposition und einer Schweißposition, in welcher der erste Arm (14) gegen eines der Metallstücke (50) in der Schweißposition drückt, wobei der erste Arm (14) entsprechend ausgestattet ist, die Schweißzone einzuschließen, um zu verhindern, dass Laseremission aus der Schweißzone austritt,
wobei der erste Arm (14) die Struktur einer inneren peripheren Oberfläche aufweist, die einen länglichen Tunnel (22) festlegt, der mit offenen vorgeschalteten und nachgeschalteten Enden ausgestattet ist, wobei der Tunnel (22) entsprechend ausgestattet ist, axial durchlaufen zu werden durch:
den Laserstrahl,
einen ersten axial fließenden Strom aus druckbelastetem gasförmigem Medium und
einen zweiten axial fließenden Strom aus gasförmigem Medium mit einem zweiten Druck, der niedriger als der des ersten Stroms ist; und
eine erste Vakuumquelle (44), die in Flüssigverbindung mit dem nachgeschalteten Ende des Tunnels (22) steht und verwendet wird, den ersten und zweiten Strom aus dem Tunnel (22) zu extrahieren unter Erzeugung eines Druckgradienten zwischen dem vorgeschalteten und nachgeschalteten Ende des Tunnels (22), sodass die Schweißverunreinigungen aus dem Tunnel (22) durch das nachgeschaltete Ende des Tunnels (22) mit dem ersten und zweiten Strom herausgesogen werden, wobei der zweite Druck geringer als der Atmosphärendruck ist, um die Bildung von Luftwirbeln zu verhindern, wobei der erste und zweite axial fließende Strom im Wesentlichen den Kontakt zwischen dem Schutzfenster und innerhalb des Tunnels (22) fließenden Schweißverunreinigungen wesentlich minimiert, wobei ein Volumen des zweiten Stroms im Wesentlichen ein Volumen des ersten Stroms innerhalb des Tunnels übersteigt, wobei der zweite Strom eine geringe Geschwindigkeit aufweist und wobei der erste und der zweite Strom axial unidirektional sind.

2. Lasernahtstepper nach Anspruch 1, darüber hinaus umfassend
einen zweiten Arm (16), der abnehmbar an die Trägersäule (54) gekoppelt ist, und
erstes und zweites materialstützende Druckendstücke (88, 100) stützt, die gegeneinander ausgerichtet sind und abnehmbar an entsprechenden ersten und zweiten Armen (14, 16) befestigt sind, wobei die Druckendstücke (88, 100) gegen entsprechende Metallstücke (50) drücken, die mit einer vorgegebenen Kraft im Rahmen eines Schweißvorgangs mit dem Laserstrahl zu verschweißen sind.

3. Lasernahtstepper nach Anspruch 1, darüber hinaus umfassend:
einen Fotodetektor (70), der zur Detektion der durch die zu verschweißenden Stücke (50) fortlaufenden Laserstrahlung ausgestattet ist, und
eine Steuereinheit (76), die ein Signal von dem Fotodetektor (70) empfängt und verwendet wird, eine Intensität des fortlaufenden Laserstrahls mit einem Referenzwert zu vergleichen, so dass, falls die gemessene Intensität dem Wert nicht entspricht, eine Leistung des Laserstrahls angepasst wird und eine Qualität der Naht verbessert wird.

4. Lasernahtstepper nach Anspruch 2, wobei der zweite Arm (16) gleitend an der Säule (54) befestigt ist und mit ersten und zweiten Bauteilen (86) ausgestattet ist, die aneinander gekoppelt sind, um eine L-Form festzulegen, wobei das zweite Bauteil (86) mit einer inneren Oberfläche ausgestattet ist, die einen hohlen Innenraum festlegt, der zur Reflexion des fortlaufenden Laserstrahls in Richtung auf den Fotodetektor (70) ausgestattet ist.

5. Lasernahtstepper nach Anspruch 4, darüber hinaus umfassend eine Vakuumeinheit (90) in Flüssigverbindung mit einem freien Ende des zweiten Bauteils (86) des L-förmigen Arms, wobei die Vakuumeinheit (90) verwendet wird, um einen ausreichenden Druckunterschied innerhalb des Innenraums zu erzeugen, um die Schweißverunreinigungen daraus zu entfernen.

6. Lasernahtstepper nach Anspruch 4, wobei der L-förmige Arm (16) mit einem abnehmbaren Bodenteil (86) zur Aufnahme von Schweißverunreinigungen ausgestattet ist, die durch Verschieben des Bodenteils davon entfernt werden.

7. Lasernahtstepper nach Anspruch 4, darüber hinaus umfassend einen pneumatischen Stellantrieb (52), der an die Säule (54) gekoppelt ist und verwendet wird zur axialen Verschiebung des zweiten Arms (16) in eine axiale Richtung (B-B) von zu fügenden Metallstücken (50) weg, um eine Kollision mit denselben zu vermeiden, und eine entgegengesetzte axiale Richtung (B-B) in Richtung zu den Stücken (50).

8. Lasernahtstepper nach Anspruch 7, wobei der pneumatische Stellantrieb (52) ausgestattet ist mit:
einer Vielzahl von vorgespannten Federn (60), die eine erste Kraft erzeugen, die den zweiten Arm (16) an einer freiwilligen Verschiebung in die entgegengesetzte axiale Richtung (B-B) hindern, und
eine Vielzahl von pneumatischen Zylindern (64), die jeweils an eine vorgespannte Feder (60) gekoppelt sind, und zur Anwendung einer zweiten Kraft auf die Feder (60) verwendet werden, sodass die Feder (60) komprimiert wird, wobei der zweite Arm (16) in die entgegengesetzte axiale Richtung (B-B) in Richtung zu den Stücken (50) verschoben wird, wenn die zweite Kraft die erste Kraft übersteigt.

9. Lasernahtstepper nach Anspruch 7, darüber hinaus umfassend einen Positionssensor (66), der zur Bestimmung einer Position der Arme (14, 16) relativ zueinander verwendet wird, wobei die zweite Kraft, die an die Feder (60) angelegt wird und ausreichend zur Verschiebung des zweiten Arms (16) ist, größer ist, wenn der zweite Arm (16) sich unterhalb des ersten Arms (14) befindet, als die zweite Kraft, wenn der zweite Arm (16) sich über dem ersten Arm (14) befindet.

10. Lasernahtstepper nach Anspruch 1, wobei der erste Arm ausgestattet ist mit:
einem Gehäuse (24), das die periphere Oberfläche bereitstellt und eine Form eines Kegelstumpfes aufweist, der sich in Richtung auf das nachfolgende Ende verjüngt;
einen Flansch (26) mit Aussparung, der mit einer peripheren Wand ausgestattet ist, die sich in Richtung auf das nachgeschaltete Ende verengt und mit einem vorgeschalteten Bereich des Gehäuses axial überlappt; und
ein T-förmiges Rohr (32), das in einer Aussparung des Flansches (26) aufgenommen ist und sich axial in das Gehäuse (24) erstreckt, um mit dem vorgeschalteten Ende desselben zu überlappen und auf diese Weise einen großen ringförmigen Raum (34) mit dem Flansch (26) und einen engen axialen Durchgang (36) mit dem Gehäuse (24) festzulegen, wobei der ringförmige Raum (34) und der Durchgang (36) in Flüssigverbindung stehen, sodass der erste Strom aus gasförmigem Medium in den Raum (34) eintritt und dann axial fließt durch den Durchgang (36) in den Tunnel (22) in Richtung auf das nachgeschaltete Ende des Gehäuses (24).

11. Lasernahtstepper nach Anspruch 10, darüber hinaus umfassend:
einen ersten Stellantrieb (96), der zur Verschiebung der Trägerplatte (92) entlang der Säule (54) verwendet wird;
einen zweiten Stellantrieb, der zur Bereitstellung einer Naht mit der gewünschten Länge verwendet wird; und
einen dritten Stellantrieb (94), der zur Bereitstellung der Naht mit einer sinusförmigen Gestalt verwendet wird, wobei die Aktoren beweglich an der Trägerplatte (92) befestigt sind.

12. Lasernahtstepper nach Anspruch 11, wobei der erste Stellantrieb (96) zur linearen Verschiebung des ersten Arms (14) zwischen einer Vielzahl von beabstandeten Positionen verwendet wird, einschließlich:
einer Ausgangs-Position, in der sich der erste Arm (14) in einem ersten Abstand von den Stücken (50) befindet,
einer Offen-Position, in der sich der erste Arm (14) in einem zweiten Abstand, der kleiner ist als der erste Abstand, von den Stücken (50) befindet;
einer Geschlossen-Position, in der sich der erste Arm (14) zwischen der Offen-Position und den Stücken (50) befindet, und
einer Greif-Position, in der der erste Arm (14) mit einer gewünschten Kraft gegen die Arbeitsstücke (50) drückt.

13. Lasernahtstepper nach Anspruch 11, wobei der erste Stellantrieb (96) zur Verschiebung der Trägerplatte (92) zwischen der Ausgangs- und der Offen-Position mit einer linearen Geschwindigkeit verwendet wird, die größer ist als eine lineare Geschwindigkeit der Trägerplatte (92) zwischen der Offen- und der Geschlossen-Position.

14. Lasernahtstepper nach Anspruch 1, darüber hinaus umfassend einen Faserlaser, der den Laserstrahl ausgibt.

15. Lasernahtstepper nach Anspruch 2, wobei Kontaktoberflächen von entsprechenden Druckendstücken (88, 100) jeweils mit einer Schutzplatte (101) aus gehärtetem Stahl versehen sind, wobei die Platten jeweils abnehmbar an der Kontaktoberfläche angebracht sind.

## Revendications

1. Un dispositif pas-à-pas pour soudure laser (10), permettant de souder deux ou plusieurs pièces en métal (50) superposées, comprenant :
une colonne de support (54) allongée, s'étendant le long d'un axe longitudinal (B-B) ;
une tête optique (20) déplaçable axialement le long de la colonne de support (54), et munie d'une optique configurée pour focaliser un faisceau laser le long d'un chemin à travers une fenêtre protectrice de la tête optique (20) sur une zone de soudure ; et,
un premier bras (14) monté sur la colonne de support (54) le long du chemin en aval de la fenêtre protectrice, et couplé à la tête optique (20), de façon à se déplacer axialement entre une position initiale et une position de soudure dans laquelle le premier bras (14) appuie sur l'une des pièces en métal (50) dans la position de soudure, le premier bras (14) étant configuré pour envelopper la zone de soudure afin d'empêcher l'émission laser de s'échapper à l'extérieur de la zone de soudure,
le premier bras (14) étant structuré avec une surface périphérique intérieure qui définit un tunnel (22) allongé, configuré avec des extrémités en amont et en aval ouvertes, le tunnel (22) étant configuré pour être traversé axialement par :
le faisceau laser
un premier courant de milieu gazeux pressurisé, circulant axialement, et
un deuxième courant de milieu gazeux, circulant axialement, à une deuxième pression inférieure à celle du premier courant et
une première source de vide (44) en communication fluidique avec l'extrémité en aval du tunnel (22) et permettant d'extraire le premier et le deuxième courant du tunnel (22) en générant un gradient de pression entre les extrémités en amont et en aval du tunnel (22) de façon à ce que les débris de soudure soient évacués du tunnel (22) par l'extrémité en aval du tunnel (22) avec le premier et le deuxième courant, la deuxième pression étant en dessous de la pression atmosphérique pour prévenir la formation de tourbillons, le premier et le deuxième courant, circulant axialement, minimisant considérablement le contact entre la fenêtre protectrice et les débris de soudure circulant dans le tunnel (22), un volume du deuxième courant dépassant considérablement un volume du premier courant dans le tunnel, le deuxième courant ayant une vitesse lente et le premier et le deuxième courant étant unidirectionnels axialement.

2. Le dispositif pas-à-pas pour soudure laser de la revendication 1, comprenant en outre
un deuxième bras (16) couplé de manière amovible à la colonne de support (54) ; et
une première et une deuxième pièce terminale de pression (88, 100), supportant le matériel, alignées l'une par rapport à l'autre et montées de manière amovible respectivement sur le premier et le deuxième bras (14, 16), les pièces terminales de pression (88, 100) appuyant sur les pièces en métal (50) qui sont respectivement à souder avec une force prédéterminée durant une opération de soudage avec le faisceau laser.

3. Le dispositif pas-à-pas pour soudure laser de la revendication 1, comprenant en outre :
un photo-détecteur (70) configuré pour détecter le rayonnement laser, se propageant à travers les pièces (50) à souder, et
un régulateur (76) recevant un signal du photo-détecteur (70) et permettant de faire correspondre une intensité du faisceau laser se propageant avec une valeur de référence de façon à ce que, si l'intensité mesurée ne correspond pas à la valeur, la puissance du faisceau laser soit ajustée et la qualité de la soudure améliorée.

4. Le dispositif pas-à-pas pour soudure laser de la revendication 2, le deuxième bras (16) étant monté de façon coulissante sur la colonne (54) et configuré avec le premier et le deuxième composant (86), couplés ensemble pour définir une forme en L, le deuxième composant (86) étant configuré avec une surface intérieure, définissant un intérieur creux configuré pour réfléchir le faisceau laser se propageant en direction du photo-détecteur (70).

5. Le dispositif pas-à-pas pour soudure laser de la revendication 4, comprenant en outre une unité de vide (90) en communication fluidique avec une extrémité libre du deuxième composant (86) du bras en forme de L, l'unité de vide (90) permettant de créer une pression différentielle à l'intérieur, suffisante pour y retirer les débris de soudure.

6. Le dispositif pas-à-pas pour soudure laser de la revendication 4, le bras en forme de L (16) étant configuré avec un fond amovible (86) recevant les débris de soudure qui sont retirés de celui-ci lors du déplacement du fond.

7. Le dispositif pas-à-pas pour soudure laser de la revendication 4, comprenant en outre un actionneur pneumatique (52) couplé à la colonne (54) et permettant de déplacer axialement le deuxième bras (16) dans une direction axiale (B-B), loin des pièces en métal (50) à souder, afin d'éviter une collision avec celles-ci, et dans une direction axiale opposée (B-B) vers les pièces (50).

8. Le dispositif pas-à-pas laser de la revendication 7, l'actionneur pneumatique (52) étant configuré avec :
une pluralité de ressorts précontraints (60), générant une première force empêchant le deuxième bras (16) d'un déplacement volontaire dans la direction axiale opposée (B-B), et
une pluralité de cylindres pneumatiques (64) respectivement couplés avec le ressort précontraint (60) et permettant d'appliquer une deuxième force au ressort (60) de façon à ce que le ressort (60) comprime le déplacement du deuxième bras (16) dans la direction axiale opposée (B-B) vers les pièces (50) lorsque la deuxième force dépasse la première.

9. Le dispositif pas-à-pas laser de la revendication 7, comprenant en outre un détecteur de position (66) permettant de déterminer une position des bras (14, 16) l'un par rapport à l'autre, et lorsque le deuxième bras (16) est en dessous du premier bras (14), la deuxième force appliquée au ressort (60), suffisante pour déplacer le deuxième bras (16), étant plus grande que la deuxième force lorsque le deuxième bras (16) est au-dessus du premier bras (14).

10. Le dispositif pas-à-pas pour soudure laser de la revendication 1, le premier bras étant configuré avec :
un boîtier (24) doté de la surface périphérique et ayant une forme frustoconique, s'amincissant vers l'extrémité en aval, une bride renfoncée (26), configurée avec une paroi périphérique, rétrécissant vers l'extrémité en aval, et chevauchant axialement une zone en amont du boîtier et
un tube en T (32) obtenu dans un renfoncement de la bride (26) et s'étendant axialement dans le boîtier (24) pour chevaucher l'extrémité en amont de ce dernier de sorte à définir un grand espace annulaire (34) avec la bride (26) et un passage axial étroit (36) avec le boîtier (24), l'espace annulaire (34) et le passage (36) étant en communication fluidique de façon à ce que le premier courant de milieu gazeux entre dans l'espace (34) et continue de couler axialement par le passage (36) dans le tunnel (22) vers l'extrémité en aval du boîtier (24).

11. Le dispositif pas-à-pas pour soudure laser de la revendication 10, comprenant en outre :
un premier actionneur (96) permettant de déplacer la plaque de support (92) le long de la colonne (54) ;
un deuxième actionneur permettant de fournir une soudure avec la longueur souhaitée ; et,
un troisième actionneur (94) permettant de doter la soudure d'une forme sinusoïdale, les actionneurs étant couplés de façon mobile avec la plaque de support (92).

12. Le dispositif pas-à-pas pour soudure laser de la revendication 11, le premier actionneur (96) permettant de déplacer linéairement le premier bras (14) parmi une pluralité de positions espacées, dont :
une position initiale dans laquelle le premier bras (14) est espacé des pièces (50) à une première distance ;
une position ouverte dans laquelle le premier bras (14) est espacé des pièces (50) à une deuxième distance plus petite que la première,
une position fermée avec le premier bras (14), située entre la position ouverte et les pièces (50) ; et
une position de prise dans laquelle le premier bras (14) appuie sur la pièce à usiner (50) avec une force souhaitée.

13. Le dispositif pas-à-pas pour soudure laser de la revendication 11, le premier actionneur (96) permettant de déplacer la plaque de support (92) entre la position initiale et la positon ouverte à une vitesse linéaire supérieure à une vitesse linéaire de la plaque de support (92) entre la position initiale et la position ouverte.

14. Le dispositif pas-à-pas pour soudure laser de la revendication 1, comprenant en outre un laser à fibre, émettant le faisceau laser.

15. Le dispositif pas-à-pas pour soudure laser de la revendication 2, les surfaces de contact des pièces terminales de pression (88, 100) étant respectivement dotées d'une plaque de protection (101) en acier trempé, chacune des plaques étant fixée de manière amovible à la surface de contact.
